# EUROPEAN PATENT APPLICATION

(11) **EP 4 832 653 A1**
(43) Date of publication of application: **28.10.2026**
(21) Application number: 24931502.9
(22) Date of filing: 28.10.2024
(51) Int. Cl.: H04W 80/06

(54) **DATA TRANSMISSION METHOD, COMMUNICATION APPARATUS, AND STORAGE MEDIUM**

(30) Priority: 26.03.2024 CN 202410359011
(71) Applicant: ZTE Corporation, Shenzhen, Guangdong 518057 (CN)
(72) Inventor: XIN, Yu, Shenzhen, Guangdong 518057 (CN); HUA, Jian, Shenzhen, Guangdong 518057 (CN); BAO, Tong, Shenzhen, Guangdong 518057 (CN)
(74) Representative: Ziebig Hengelhaupt Intellectual Property Attorneys Patentanwaltskanzlei PartGmbB
(86) International application number: PCT/CN2024/127784
(87) International publication number: WO 2025/200421

(57) **Abstract**

Provided in the present disclosure are a data transmission method, a communication apparatus, and a storage medium. The data transmission method comprises: K transmitting nodes transmitting reference signals on the same M subcarriers in N time-domain symbols, wherein the frequency-domain interval between two adjacent subcarriers among the M subcarriers is Q subcarriers, the phases of reference signals transmitted by a kth transmitting node among the K transmitting nodes on mth subcarriers in two adjacent time-domain symbols among the N time-domain symbols differ by the same phase angle θ(k), k is a serial number for the K transmitting nodes, and m is a serial number for the M subcarriers.

## Description

The present disclosure claims the priority to a Chinese patent application No. 202410359011.2, filed on March 26, 2024, the entire content of which is incorporated herein by reference.

### TECHNICAL FIELD

The present disclosure relates to the communication technology field, and in particular, to a data transmission method, a communication apparatus, and a storage medium.

### BACKGROUND

With the popularization and application of the 5th generation mobile communication technology (5G), new radio (NR) technology has become a key component thereof. In 5G NR, a cyclic prefix orthogonal frequency division multiplexing (CP-OFDM) waveform has been widely applied, which effectively improves the performance of a wireless communication system, with its excellent capabilities in resisting multipath interference and inter-carrier interference. However, transmitting a sensing signal on a time-frequency resource of the CP-OFDM waveform occupies time-frequency resources used for communication data. Particularly in an integrated sensing and communication scenario, when multiple transmission nodes need to transmit sensing signals simultaneously, more time-frequency resources that should be used for communication are occupied, resulting in a significant reduction in spectral efficiency.

Therefore, how a receiving side can perform wireless environment monitoring and sensing for multiple transmission nodes simultaneously without affecting the spectral efficiency of communication, has become an urgent problem to be solved in the current communication technology field.

### SUMMARY

The embodiments of the present disclosure provide a data transmission method, a communication apparatus, and a storage medium, which help improve spectral efficiency. The technical solutions provided in the embodiments of the present disclosure are as follows.

In an aspect, a data transmission method is provided, and the data transmission method includes: transmitting, by K transmission nodes, reference signals on same M subcarriers in N time-domain symbols; where a frequency-domain interval between two adjacent subcarriers among the M subcarriers is Q subcarriers, K and Q are positive integers, N and M are integers greater than 1; where a phase difference between reference signals transmitted by a k-th transmission node among the K transmission nodes on m-th subcarriers of two adjacent time-domain symbols among the N time-domain symbols is a same phase angle θ(k); k is a sequence number of the transmission node among the K transmission nodes, m is a sequence number of the subcarrier among the M subcarriers, k is a non-negative integer less than or equal to K, m is a non-negative integer less than or equal to M.

In another aspect, a data transmission apparatus is provided, and the data transmission apparatus includes: a communication module, configured to: transmit, by K transmission nodes, reference signals on same M subcarriers in N time-domain symbols. A phase difference between reference signals transmitted by a k-th transmission node among the K transmission nodes on m-th subcarriers of two adjacent time-domain symbols among the N time-domain symbols is a same phase angle θ(k); k is a sequence number of the transmission node among the K transmission nodes, m is a sequence number of the subcarrier among the M subcarriers, k is a non-negative integer less than or equal to K, m is a non-negative integer less than or equal to M.

In yet another aspect, a communication apparatus is provided, and the communication apparatus includes: a memory and a processor. The memory is coupled to the processor; the memory is configured to store computer program instructions executable by the processor; and the processor, upon executing the computer program instructions, implements the data transmission method described above.

In yet another aspect, a computer-readable storage medium is provided, and the computer-readable storage medium stores computer program instructions. The computer program instructions, upon being run on a computer (for example, a data transmission apparatus or a communication apparatus), implement the data transmission method described above.

In yet another aspect, a computer program product is provided, the computer program product includes computer program instructions, and the computer program instructions, upon being executed, implement the data transmission method described above.

### BRIEF DESCRIPTION OF THE DRAWINGS

FIG. 1 is a schematic diagram of an architecture of a communication system, according to the embodiments of the present disclosure.
FIG. 2 is a flowchart of a data transmission method according to the embodiments of the present disclosure.
FIG. 3 is a schematic diagram of time-frequency resources according to the embodiments of the present disclosure.
FIG. 4 is another schematic diagram of time-frequency resources according to the embodiments of the present disclosure.
FIG. 5 is yet another schematic diagram of time-frequency resources according to the embodiments of the present disclosure.
FIG. 6 is yet another schematic diagram of time-frequency resources according to the embodiments of the present disclosure.
FIG. 7 is yet another schematic diagram of time-frequency resources according to the embodiments of the present disclosure.
FIG. 8 is yet another schematic diagram of time-frequency resources according to the embodiments of the present disclosure.
FIG. 9 is yet another schematic diagram of time-frequency resources according to the embodiments of the present disclosure.
FIG. 10 is yet another schematic diagram of time-frequency resources according to the embodiments of the present disclosure.
FIG. 11 is yet another schematic diagram of time-frequency resources according to the embodiments of the present disclosure.
FIG. 12 is yet another schematic diagram of time-frequency resources according to the embodiments of the present disclosure.
FIG. 13 is yet another schematic diagram of time-frequency resources according to the embodiments of the present disclosure.
FIG. 14 is yet another schematic diagram of time-frequency resources according to the embodiments of the present disclosure.
FIG. 15 is yet another schematic diagram of time-frequency resources according to the embodiments of the present disclosure.
FIG. 16 is a structural schematic diagram of a data transmission apparatus according to the embodiments of the present disclosure.
FIG. 17 is a structural schematic diagram of a communication apparatus according to the embodiments of the present disclosure.

### DETAILED DESCRIPTION

The technical solutions in the embodiments of the present disclosure will be described clearly and completely below with reference to the drawings in the embodiments of the present disclosure. Obviously, the described embodiments are only some, but not all, of the embodiments of the present disclosure. Based on the embodiments of the present disclosure, all other embodiments obtained by those ordinary skilled in the art without making creative efforts shall fall within the scope of protection of the present disclosure.

In the description of the present disclosure, unless otherwise specified, "/" means "or". For example, A/B may represent A or B. The "and/or" herein is used only to describe an association relationship between associated objects, and indicates that three relationships may exist. For example, A and/or B may represent: only A, only B, and both A and B. Furthermore, "at least one" refers to one or more, and "multiple/plurality of" refers to two or more. The terms such as "first" and "second" do not limit the number or execution order, and the terms such as "first" and "second" also do not necessarily limit that they are different.

It should be noted that in the present disclosure, the terms such as "exemplary (exemplarily)" or "for example/such as/e.g." are used to describe examples, illustrations, or descriptions. Any embodiment or design solution described in the present disclosure using the terms such as "exemplary (exemplarily)" or "for example/such as/e.g." should not be explained as being more preferred or advantageous than other embodiments or design solutions. To be precise, the terms such as "exemplary (exemplarily)" or "for example/such as/e.g." are used to present related concepts in a specific manner.

With the popularization and application of 5G, the NR technology has become a key component thereof. In 5G NR, a CP-OFDM waveform has been widely applied, which effectively improves the performance of a wireless communication system, with its excellent capabilities in resisting multipath interference and inter-carrier interference.

However, transmitting a sensing signal on a time-frequency resource of the CP-OFDM waveform occupies time-frequency resources used for communication data. Particularly in an integrated sensing and communication scenario, when multiple transmission nodes need to transmit sensing signals simultaneously, more time-frequency resources that should be used for communication are occupied, resulting in a significant reduction in spectral efficiency.

Therefore, how a receiving side can perform wireless environment monitoring and sensing for multiple transmission nodes simultaneously without affecting the spectral efficiency of communication, has become an urgent problem to be solved in the current communication technology field.

In view of this, the present disclosure proposes a data transmission method, and the data transmission method includes: transmitting, by K transmission nodes, reference signals on same M subcarriers in N time-domain symbols; where a frequency-domain interval between two adjacent subcarriers among the M subcarriers is Q subcarriers, K and Q are positive integers, N and M are integers greater than 1; where a phase difference between reference signals transmitted by a k-th transmission node among the K transmission nodes on m-th subcarriers of two adjacent time-domain symbols among the N time-domain symbols is a same phase angle θ(k); k is a sequence number of the transmission node among the K transmission nodes, m is a sequence number of the subcarrier among the M subcarriers, k is a non-negative integer less than or equal to K, m is a non-negative integer less than or equal to M.

In this design, the K transmission nodes transmit the reference signals on the same M subcarriers in the N time-domain symbols, and the frequency-domain interval between two adjacent subcarriers among the M subcarriers is Q subcarriers, which helps the receiving side to simultaneously acquire channel information of the K different transmission nodes from the reference signals on the N*M subcarriers, thereby sensing an entire wireless environment channel condition. Meanwhile, adjusting the frequency-domain interval Q between two adjacent subcarriers among the M subcarriers may enable a flexible configuration of positions of the M subcarriers in the frequency domain, thereby adjusting frequency-domain resources occupied for transmitting the reference signals, to adapt to different communication scenarios. A phase difference between reference signals transmitted by a k-th transmission node among the K transmission nodes on m-th subcarriers of two adjacent time-domain symbols among the N time-domain symbols is a same phase angle θ(k), so that the reference signal of each transmission node during the transmission does not interfere with the transmissions of the reference signals of other transmission nodes. Moreover, these reference signals may also be used for channel estimation in communication, without additionally occupying time-frequency resources, which helps improve spectral efficiency.

The data transmission method provided in the embodiments of the present disclosure may be applied to systems of various communication standards. For example, systems to which the data transmission method provided in the embodiments of the present disclosure may be applied, include but are not limited to, a long term evolution (LTE) system, various versions evolved based on LTE, a 5G system, and other communication systems. Furthermore, the data transmission method provided in the embodiments of the present disclosure may also be applied to future-oriented communication systems (e.g., a 6G communication system), etc.

A network architecture of a mobile communication network (including but not limited to 3G, 4G, 5G and future mobile communication networks) in the embodiments of the present disclosure may at least include a first communication node and a second communication node. It should be understood that, in this example, in a downlink, the first communication node may be a network-side device (including but not limited to, for example, a base station), and the second communication node may be a terminal-side device (including but not limited to, for example, a terminal). Of course, in an uplink, the first communication node may also be a terminal-side device, and the second communication node may also be a network-side device. In a device-to-device communication between two communication nodes, both the first communication node and the second communication node may be base stations or terminals. The first communication node and the second communication node may be simply referred to as a first node and a second node, respectively.

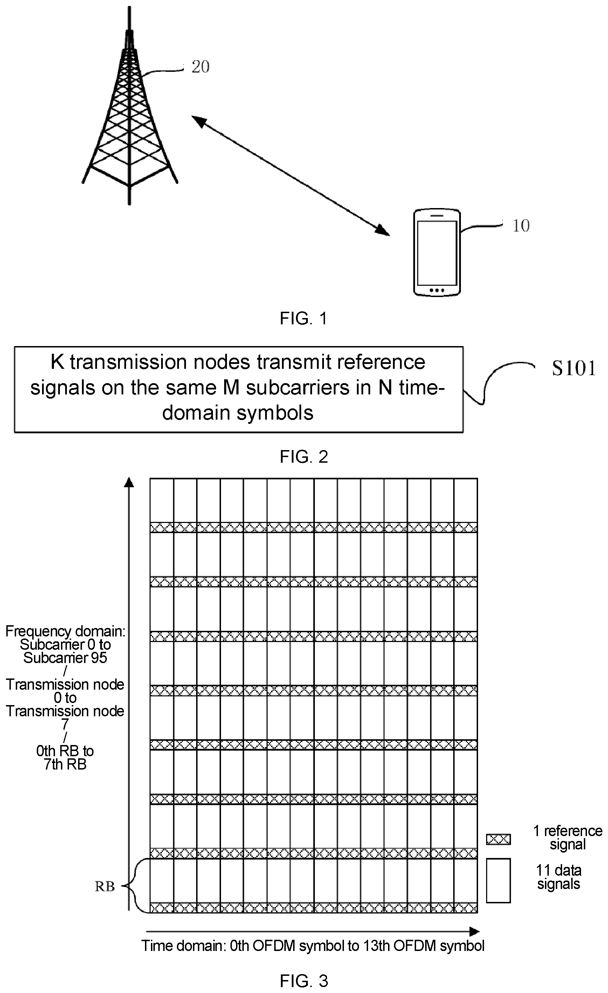

Exemplarily, it is taken as an example that the first communication node is a terminal and the second communication node is a base station. As shown in FIG. 1, it illustrates a communication system of the embodiments of the present disclosure. The communication system includes a terminal 10 and a base station 20. There may be one or more terminals 10 and base stations 20, the number of which is not limited.

In some embodiments, the base station 20 provides radio access services to the terminal 10. The base station 20 provides at least one service coverage area (which may also be referred to as a cell). The terminal 10 entering this area may communicate with the base station 20 via wireless signals, to receive the radio access services provided by the base station 20.

In some embodiments, the base station (BS) may be a base station in LTE, long term evolution advanced (LTEA), or an evolutional base station (evolutional node B, eNB or eNodeB), a base station device in the 5G network, or a base station in future communication systems, and so on. The base station may include various macro base stations, micro base stations, home base stations, remote radio devices, reconfigurable intelligent surfaces (RIS), routers, relays, transmission and reception points (TRPs), wireless fidelity (WIFI) devices, and various network side devices.

In some embodiments, the terminal may be a device with a wireless transceiver function. The terminal may be a mobile phone, a tablet computer (Pad), a computer with a wireless transceiver function, a virtual reality (VR) terminal, an augmented reality (AR) terminal, a wireless terminal in industrial control, a wireless terminal in self driving, a wireless terminal in remote medical, a wireless terminal in smart grid, a wireless terminal in transportation safety, a wireless terminal in smart city, a wireless terminal in smart home, etc. The embodiments of the present disclosure do not limit the application scenarios. The terminal sometimes may also be referred to as a user, user equipment (UE), access terminal, UE unit, UE station, mobile station, mobile platform, remote station, remote terminal, mobile device, UE terminal, wireless communication device, UE agent, UE apparatus, etc., which is not limited in the embodiments of the present disclosure.

It should be noted that FIG. 1 is only an exemplary framework diagram, and the number of devices and the names of the respective devices included in FIG. 1 are not limited, and in addition to the devices shown in FIG. 1, the communication system may also include other devices, such as a core network device.

The application scenarios are not limited in the embodiments of the present disclosure. The system architectures and service scenarios described in the embodiments of the present disclosure are intended to more clearly illustrate the technical solutions of the embodiments of the present disclosure, and do not limit the technical solutions provided in the embodiments of the present disclosure, and those ordinary skilled in the art may know that with the evolution of the network architectures and the emergence of new service scenarios, the technical solutions provided in the embodiments of the present disclosure may also be applicable for similar technical problems.

The embodiments of the present disclosure provide a data transmission method. As shown in FIG. 2, the data transmission method includes the following S101: K transmission nodes transmit reference signals on same M subcarriers in N time-domain symbols.

A frequency-domain interval between two adjacent subcarriers among the M subcarriers is Q subcarriers, K and Q are positive integers, N and M are integers greater than 1. In this way, by adjusting the frequency-domain interval Q between two adjacent subcarriers among the M subcarriers, the positions of the M subcarriers in the frequency domain may be flexibly configured, to adjust frequency-domain resources occupied by transmitting the reference signals, so as to adapt to different communication scenarios.

A phase difference between reference signals transmitted by a k-th transmission node among the K transmission nodes on m-th subcarriers of two adjacent time-domain symbols among the N time-domain symbols is a same phase angle θ(k); k is a sequence number of the K transmission nodes, m is a sequence number of the M subcarriers. For example, k is a non-negative integer less than or equal to K-1 (i.e., k is 0, 1, 2, ..., K-1), or k is a positive integer less than or equal to K (i.e., k is 1, 2, 3, ..., K), and m is a non-negative integer less than or equal to M-1 (i.e., m is 0, 1, 2, ... M-1) or m is a positive integer less than or equal to M (i.e., m is 1, 2, 3, ..., M).

In some embodiments, Q is an integer multiple of a number of subcarriers contained in a resource block.

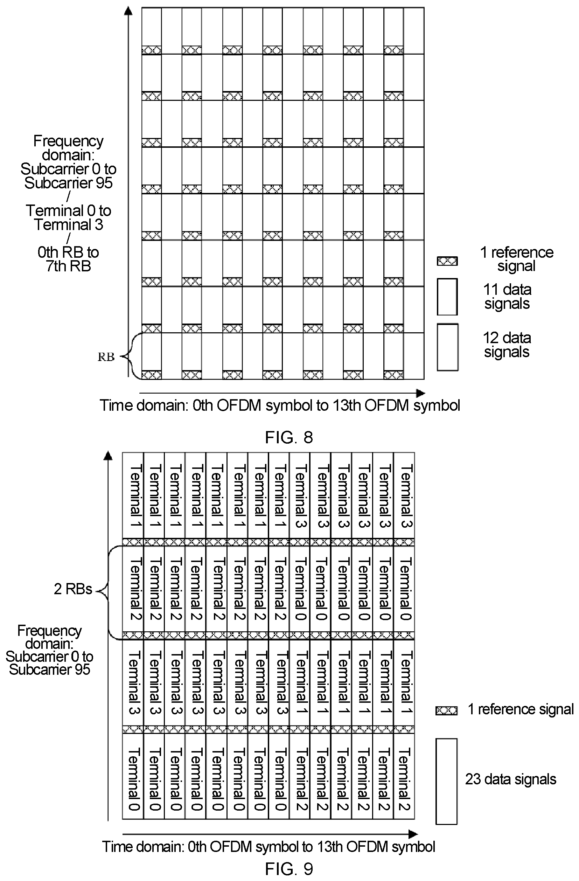

Exemplarily, as shown in FIG. 3, 8 transmission nodes transmit data signals and reference signals on resource blocks composed of 14 orthogonal frequency-division multiplexing (OFDM) symbols (i.e., the above-mentioned time-domain symbols) (i.e., the 0th OFDM symbol to the 13th OFDM symbol in the figure), each OFDM symbol including 8 resource blocks (RBs) (96 subcarriers). Each transmission node transmits the reference signals on the same 8 subcarriers in each OFDM symbol, and the frequency-domain interval between two adjacent subcarriers among the 8 subcarriers is 12 subcarriers. Each transmission node transmits the reference signal on a first subcarrier of all RBs.

In some embodiments, a phase of a reference signal transmitted by the k-th transmission node on an m-th subcarrier of an n-th time-domain symbol among the N time-domain symbols is related to n, and n is a non-negative integer less than or equal to N (i.e., n is 0, 1, 2, ..., N-1, or n is 1, 2, 3, ..., N).

In some embodiments, the phase of the reference signal transmitted by the k-th transmission node on the m-th subcarrier of the n-th time-domain symbol among the N time-domain symbols increases monotonically with an interval of θ(k). Moreover, when θ(k) is a positive value, the phase of the reference signal transmitted by the k-th transmission node on the m-th subcarrier of the n-th time-domain symbol among the N time-domain symbols has a positive correlation with n; and when θ(k) is a negative value, the phase of the reference signal transmitted by the k-th transmission node on the m-th subcarrier of the n-th time-domain symbol among the N time-domain symbols has a negative correlation with n. The n is numbered in a sequential order of the time-domain symbols.

In some embodiments, the reference signal transmitted by the k-th transmission node among the K transmission nodes on the m-th subcarrier of the n-th time-domain symbol among the N time-domain symbols is R(k,m,n), then R(k,m,n)=R(k,m,0)*exp(jnθ(k)), where R(k,m,0) is a reference signal transmitted by the k-th transmission node on the m-th subcarrier of a first time-domain symbol.

In some embodiments, the phase angles θ(k) of different transmission nodes among the K transmission nodes being different may also be understood as: for the phase angle θ(k) corresponding to the k-th transmission node among the K transmission nodes, θ(k) being different when k is a different value. In this way, it is convenient for the K transmission nodes to transmit the reference signals on the same N*M subcarriers, and it helps reduce interference between the reference signals.

Exemplarily, continuing to refer to FIG. 3, the reference signal transmitted by the k-th transmission node on the m-th subcarrier of the n-th OFDM symbol is: R(k,m,n)=1*exp(jnθ(k)), i.e., the reference signal transmitted by each transmission node on 8 subcarriers of the 0th OFDM symbol (i.e., the above-mentioned first time-domain symbol) is the same, where θ(k)=2πk/14, k is a number of the transmission node, k=0, 1, 2, ..., 7; m is a subcarrier number of the reference signal, m=0, 1, 2, ..., 7; and n is an OFDM symbol number, n=0, 1, 2, ..., 13.

In this way, the reference signal of any transmission node will not interfere with data information on other subcarriers of other transmission nodes, and moreover, the reference signal of each transmission node is transmitted on the same N*M subcarriers by using a special orthogonal multiplexing scheme, thereby avoiding mutual interference.

In some embodiments, phase angles θ(k) of different transmission nodes among the K transmission nodes are different, including: the phase angle θ(k) of the k-th transmission node among the K transmission nodes is determined according to a value of k.

In some embodiments, the phase angles θ(k) of different transmission nodes among the K transmission nodes are different, including: the phase angle θ(k) of the k-th transmission node among the K transmission nodes satisfies a formula θ(k)=2πkB/N, B being a positive integer and being a system configuration parameter, N being greater than or equal to B*K, k being 0, 1, 2, ..., K-1 or k being 1, 2, 3, ..., K.

In some embodiments, the phase angles θ(k) of different transmission nodes among the K transmission nodes are different, including: the phase angles θ(k) of different transmission nodes among the K transmission nodes are an element in a phase angle set, respectively, the phase angle set at least including K different elements, each of the K different elements satisfying a formula θ(k)=2πiB/N, i being a non-negative integer and being a difference between a floor of N/B and 1, B being a positive integer and being a system configuration parameter. The difference between the floor of N/B and 1 may also be expressed as floor(N/B)-1, floor() representing rounding down.

In some embodiments, the phase angles θ(k) of different transmission nodes among the K transmission nodes are different, including: the phase angles θ(k) of different transmission nodes among the K transmission nodes are an element in a phase angle set, respectively, the phase angle set including N different elements, each of the N different elements satisfying a formula: θ(k)=2πi/N, i being a non-negative integer less than N-1, N being greater than or equal to K.

In some embodiments, transmitting, by the K transmission nodes, the reference signals on the same M subcarriers in the N time-domain symbols, includes: positions of the M subcarriers in the N time-domain symbols being same; transmitting, by the K transmission nodes, the reference signals on same N*M subcarrier resources.

In this way, on one hand, the positions of the M subcarriers in the N time-domain symbols are the same, indicating that subcarrier positions occupied by the reference signals on different time-domain symbols are the same, which helps the receiving side to receive and process the reference signals; on the other hand, the K transmission nodes transmit the reference signals on the same N*M subcarrier resources without additionally occupying other subcarrier resources for transmitting the reference signals, which helps improve spectral efficiency.

In some embodiments, an interval between two adjacent time-domain symbols among the N time-domain symbols is same.

In some embodiments, the N time-domain symbols are continuous in a time domain.

In some embodiments, there is a subcarrier for transmitting the reference signals, in each resource block in the N time-domain symbols.

Exemplarily, when an interval between two adjacent subcarriers in the frequency domain among the M subcarriers is 12 subcarriers, there is a subcarrier for transmitting the reference signals, in each resource block among the N time-domain symbols.

In some embodiments, an interval between two adjacent subcarriers among the M subcarriers is same.

In some embodiments, the M subcarriers are continuous in the frequency domain.

Exemplarily, assuming that the M subcarriers that are continuous in the frequency domain are sequentially named as a 0th subcarrier, a 1st subcarrier, ..., an M-1-th subcarrier, and in this way, when two subcarriers are subcarriers that are continuous in the frequency domain, a sequence number difference between these two subcarriers is 1 (for example, the 1st subcarrier and the 2nd subcarrier are subcarriers that are continuous in the frequency domain, and the sequence number difference between the 1st subcarrier and the 2nd subcarrier is 1). Based on this, it may be obtained that if the sequence number difference between every two adjacent subcarriers in the frequency domain among the M subcarriers is 1, then these M subcarriers are continuous in the frequency domain.

In some embodiments, reference signals transmitted by different transmission nodes among the K transmission nodes on other time-domain symbols other than the first time-domain symbol are different.

In some embodiments, reference signals transmitted by different transmission nodes among the K transmission nodes on the first time-domain symbol are different or same.

Exemplarily, the reference signal transmitted by the k-th transmission node among the K transmission nodes on the first time-domain symbol may be expressed as R(k,m,0), and R(k,m,0) corresponding to different transmission nodes among the K transmission nodes is different.

In some embodiments, phase differences between reference signals transmitted by different transmission nodes among the K transmission nodes on adjacent time-domain symbols are different. The phase difference may also be referred to as a phase change, which is not limited in the present disclosure.

In some embodiments, the phase difference of reference signals transmitted by different transmission nodes among the K transmission nodes on adjacent time-domain symbols is θ(k)=2πkB/N. In a case where B is unchanged, θ(k) is related to k.

In some embodiments, the K transmission nodes include at least one of: a terminal, a base station, an application device (which may also be referred to as a fixed transceiver device).

Exemplarily, the K transmission nodes are K terminals, or the K transmission nodes are K base stations, or the K transmission nodes include an application device. For example, the application device is one of: a router, a customer premises equipment (CPE), a relay node, or a switch.

In some embodiments, modulo values of reference signals transmitted by a same transmission node among the K transmission nodes on the same M subcarriers in the N time-domain symbols are same. The modulo value may also have other names, e.g., amplitude.

In some embodiments, a phase difference between reference signals transmitted by a same transmission node among the K transmission nodes on adjacent subcarriers among the M subcarriers in a same time-domain symbol is same. **It** may also be described that a difference between reference signals transmitted by a same transmission node among the K transmission nodes on adjacent subcarriers among M subcarriers of a same time-domain symbol has a same phase.

In some embodiments, reference signals transmitted by a same transmission node among the K transmission nodes on the M subcarriers in a same time-domain symbol are same. **It** can be understood that reference signals transmitted by a same transmission node among the K transmission nodes on the M subcarriers in a same time-domain symbol have no phase offset, i.e., phases of reference signals transmitted on adjacent subcarriers among the M subcarriers are the same or the phase difference between reference signals transmitted on adjacent subcarriers among the M subcarriers is 0. **It** may also be understood that reference signals transmitted by a same transmission node among the K transmission nodes on the M subcarriers of a same time-domain symbol are not related to the value of m.

Exemplarily, assuming that the reference signal transmitted by the k-th transmission node among the K transmission nodes on the M subcarriers of the first time-domain symbol may be expressed as R(k,m,0), and R(k,m,0) is equal for different values of m when k is unchanged.

Exemplarily, the reference signal transmitted by the k-th transmission node among K transmission nodes on M subcarriers of an n-th time-domain symbol may also be expressed as R(k,n)=R(k,0)*exp(jnθ(k)), where R(k,0) is a reference signal transmitted by the k-th transmission node among the K transmission nodes on the first time-domain symbol.

In some embodiments, the K transmission nodes transmit other signals on other subcarriers other than the M subcarriers on the N time-domain symbols. The other signals may include at least one of: a data signal, a reference signal with a same type as the above-mentioned reference signal, and a reference signal with a different type from the above-mentioned reference signal.

In some embodiments, different transmission nodes among the K transmission nodes transmit other signals on different frequency-domain resources of the N time-domain symbols. In this way, interference generated when the multiple transmission nodes transmit the other signals is reduced.

Exemplarily, continuing to refer to FIG. 3, each of 8 transmission nodes transmits the reference signal on a first subcarrier of all RBs. Data signals (which may also include other reference signals) of the 8 transmission nodes are respectively mapped onto the last 11 subcarriers in each RB, and the 8 RBs from lower to upper respectively correspond to the 8 transmission nodes. That is, on this resource block, each transmission node of the 8 transmission nodes transmits 8*14 reference signals at the same time-frequency position, and different transmission nodes of the 8 transmission nodes respectively transmit 11*14 data signals at different time-frequency positions.

In some embodiments, there is a transmission node among the K transmission nodes, and this transmission node transmits other signals on different frequency-domain resources of N time-domain symbols. In this way, when the transmission node needs to transmit many other signals, it may occupy multiple frequency-domain resources of the N time-domain symbols to transmit the other signals. In some embodiments, a frequency-domain resource bandwidth for each transmission node among the K transmission nodes to transmit other signals is less than a frequency-domain interval between a first subcarrier and a last subcarrier among the M subcarriers.

In some embodiments, power of the reference signals is greater than or equal to power of the other signals.

Exemplarily, in a case where the other signals are data signals, power of the reference signals is greater than or equal to power of the data signals.

In some embodiments, the K transmission nodes superpose and transmit other signals other than the reference signals on the same M subcarriers in the N time-domain symbols, and phase angles of the other signals are different from phase angles of the K transmission nodes. The other signals may include data signals, and may also include other reference signals. In this way, the data signals may be transmitted at other spare positions other than positions for transmitting the reference signals in a Doppler domain, thereby improving spectrum resource utilization.

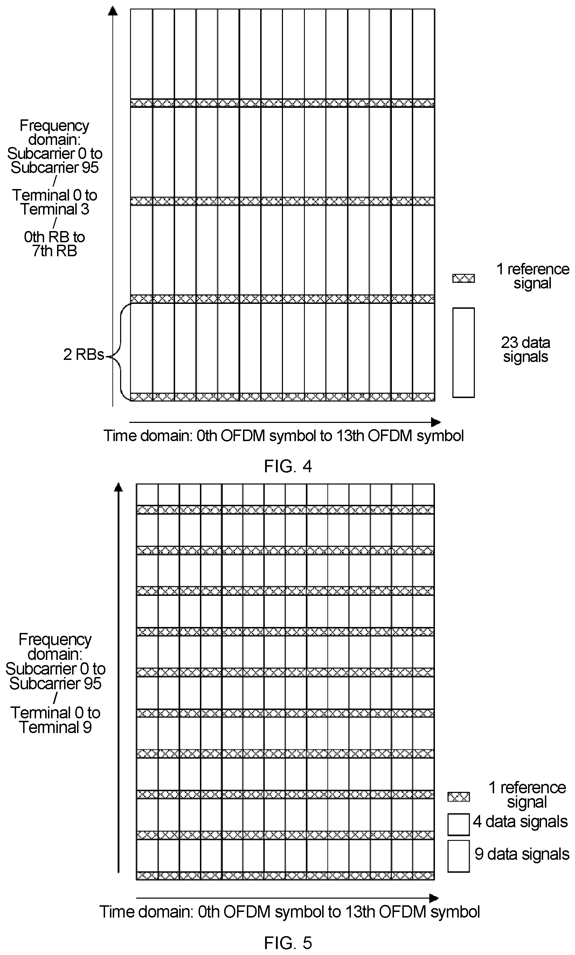

Exemplarily, as shown in FIG. 4, there are 4 transmission nodes (which may be any combination of terminals, base stations, or application devices, and in this example, all 4 transmission nodes are terminals) (i.e., terminal 0 to terminal 3 in the figure) transmitting data signals and reference signals on resource blocks composed of 14 OFDM symbols (i.e., the 0-th OFDM symbol to the 13-th OFDM symbol in the figure), each OFDM symbol containing 8 RBs (96 subcarriers).

Each terminal transmits reference signals on the same 4 subcarriers in each OFDM symbol, and a frequency-domain interval between two adjacent subcarriers among the 4 subcarriers is 24 subcarriers. Each terminal transmits the reference signal on a first subcarrier of every 2 RBs. Data signals of the 4 terminals are respectively mapped onto the last 23 subcarriers in every 2 RBs, and the 8 RBs from lower to upper respectively correspond to the 4 terminals. That is, on this resource block, each terminal transmits 4*14 reference signals at the same time-frequency position, and different terminals respectively transmit 23*14 data signals at different time-frequency positions.

A reference signal transmitted by the k-th terminal (i.e., terminal k) on an m-th subcarrier of an n-th OFDM symbol is: R(k,m,n)=exp(j*pi*k/2)*exp(j*pi*k*m/2)*exp(jnθ(k)), i.e., each terminal transmits a different reference signal on the 0-th OFDM symbol. θ(k)=2πk/14, k is a number of the transmission node (terminal), k=0,1,2,3, m is a subcarrier number of the reference signal, m=0,1,2,3, and n is an OFDM symbol number, n=0,1,2,...13. That is, in this case, delay domain positions of reference signals of different terminals mapped on the Doppler delay domain are different.

Exemplarily, as shown in FIG. 5, there are 10 transmission nodes (which may be any combination of terminals, base stations, or application devices, and in this example, all 10 transmission nodes are terminals) (i.e., terminal 0 to terminal 9 in the figure) transmitting data signals and reference signals on resource blocks composed of 14 OFDM symbols (i.e., the 0-th OFDM symbol to the 13-th OFDM symbol in the figure), each OFDM symbol containing 8 RBs (96 subcarriers).

Each terminal transmits reference signals on the same 10 subcarriers in each OFDM symbol, and a frequency-domain interval between two adjacent subcarriers among the 10 subcarriers is 10 subcarriers. Each terminal transmits the reference signal on a first subcarrier of every 10 subcarriers. Data signals of the first 9 terminals (i.e., terminal 0 to terminal 8 in the figure) are respectively mapped onto the last 9 subcarriers of every 10 subcarriers, the data signal of terminal 9 is mapped onto the last 4 subcarriers (i.e., subcarrier 92 to subcarrier 95 in the figure) of the 96 subcarriers, and from lower to upper respectively correspond to the 10 terminals. That is, on this resource block, each terminal transmits 10*14 reference signals at the same time-frequency position, each terminal of the first 9 terminals respectively transmits 9*14 data signals at different time-frequency positions, and terminal 9 transmits 4*14 data signals.

A reference signal transmitted by the k-th terminal (i.e., terminal k) on the m-th subcarrier of the n-th OFDM symbol is: R(k,m,n)=exp(j*pi*k/5)*exp(jnθ(k)), i.e., each terminal transmits a different reference signal on the 0-th OFDM symbol. θ(k)=2πk/14, where k is a number of the transmission node (terminal), k=0,1,2, ..., 10, m is a subcarrier number of the reference signal, m=0,1,2, ..., 10, and n is an OFDM symbol number, n=0,1,2, ..., 13.

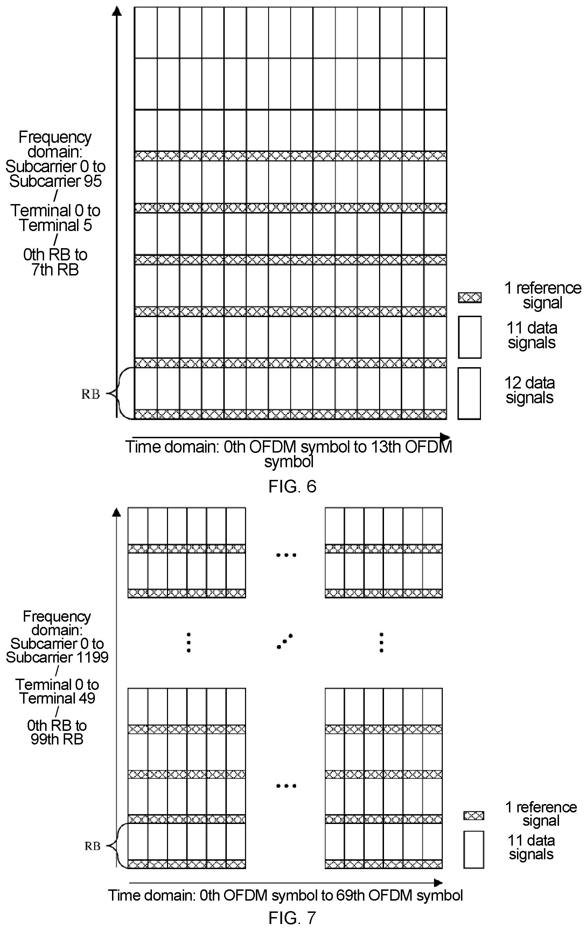

Exemplarily, as shown in FIG. 6, there are 8 transmission nodes (which may be any combination of terminals, base stations, or application devices, and in this example, all 8 transmission nodes are terminals) (i.e., terminal 0 to terminal 7 in the figure) transmitting data signals and reference signals on resource blocks composed of 14 OFDM symbols (i.e., the 0-th OFDM symbol to the 13-th OFDM symbol in the figure), each OFDM symbol containing 8 RBs (96 subcarriers).

Each terminal transmits the reference signal on the same 6 subcarriers in each OFDM symbol, and a frequency-domain interval between two adjacent subcarriers among the 6 subcarriers is 12 subcarriers. Each terminal transmits the reference signal on a first subcarrier of each RB of the first 6 RBs (the 0-th RB to the 5-th RB). Data signals (which may also include other reference signals) of the first 6 terminals (i.e., terminal 0 to terminal 5 in the figure) are respectively mapped onto the last 11 subcarriers of each RB of the first 6 RBs. Data signals (which may also include other reference signals) of the last 2 terminals (i.e., terminal 6 to terminal 7 in the figure) are respectively mapped onto 12 subcarriers of each RB of the last 2 RBs, and the 8 RBs from lower to upper respectively correspond to the 8 terminals. That is, on this resource block, each terminal transmits 6*14 reference signals at the same time-frequency position, the first 6 terminals transmit 11*14 data signals, and the last two terminals transmit 12*14 data signals.

The reference signal transmitted by the k-th terminal (i.e., terminal k) on the m-th subcarrier of the n-th OFDM symbol is: R(k,m,n)=1*exp(jnθ(k)), that is, each terminal transmits the same reference signal on 6 subcarriers on the 0-th OFDM symbol. θ(k)=2πk/14, where k is a number of the transmission node (terminal), k=0,1,2, ..., 7, m is a subcarrier number of the reference signal, m=0,1,2, ..., 7, and n is an OFDM symbol number, n=0,1,2, ..., 13.

Exemplarily, as shown in FIG. 7, there are 50 transmission nodes (which may be any combination of terminals, base stations, or application devices; in this example, all 50 transmission nodes are terminals) (i.e., terminal 0 to terminal 49 in the figure) transmitting data signals and reference signals on resource blocks composed of 70 OFDM symbols (i.e., the 0-th OFDM symbol to the 69-th OFDM symbol in the figure), each OFDM symbol containing 100 RBs (1200 subcarriers).

Each terminal transmits the reference signal on the same 100 subcarriers in each OFDM symbol, and a frequency-domain interval between two adjacent subcarriers in the 100 subcarriers is 12 subcarriers. Each terminal transmits the reference signal on the first subcarrier of all RBs; the data signals of 50 terminals are respectively mapped on the remaining 22 subcarriers in every 2 RBs, and the 100 RBs from lower to upper respectively correspond to the 50 terminals. That is, on this resource block, each terminal transmits 100*70 reference signals at the same time-frequency position and transmits 22*70 data signals at different time-frequency positions.

The reference signal transmitted by the k-th terminal (i.e., terminal k) on the m-th subcarrier of the n-th OFDM symbol is: R(k,m,n)=1*exp(jnθ(k)), that is, the reference signal transmitted by each terminal on 100 subcarriers of the 0-th OFDM symbol is the same. θ(k)=2πk/14, where k is a number of the transmission node (terminal), k is a non-negative integer less than 50, m is a subcarrier number of the reference signal, m is a non-negative integer less than 50, n is an OFDM symbol number, n is a non-negative integer less than 70.

Exemplarily, as shown in FIG. 8, there are 4 transmission nodes (which may be any combination of terminals, base stations, or application devices; in this example, all 4 transmission nodes are terminals) (i.e., terminal 0 to terminal 3 in the figure) transmitting data signals and reference signals on resource blocks composed of 14 OFDM symbols (i.e., the 0-th OFDM symbol to the 13-th OFDM symbol in the figure), each OFDM symbol containing 8 RBs (96 subcarriers).

Each terminal transmits the reference signal on the same 8 subcarriers in 7 OFDM symbols, a frequency-domain interval between two adjacent subcarriers among the 8 subcarriers is 12 subcarriers, and an interval between two adjacent OFDM symbols in the time domain in the 7 OFDM symbols is 1 OFDM symbol. In an OFDM symbol at an odd symbol position (i.e., the 0th OFDM symbol, the 2nd OFDM symbol, ..., in the figure), each terminal transmits the reference signal on the first subcarrier of all RBs. The data signals of the 4 terminals are respectively mapped on the remaining 22 subcarriers in every 2 RBs, and the 8 RBs from lower to upper respectively correspond to 4 terminals. In an OFDM symbol at an even symbol position (i.e., the 1st OFDM symbol, the 3rd OFDM symbol, ..., in the figure), the data signals of the 4 terminals are respectively mapped on all subcarriers in every 2 RBs. That is, on this resource block, each terminal transmits 8*7 reference signals at the same time-frequency position and transmits (22+24)*7 data signals at different time-frequency positions.

The reference signal transmitted by the k-th terminal (i.e., terminal k) on the m-th subcarrier of the n-th OFDM symbol (the OFDM symbol for transmitting the reference signal) is: R(k,m,n)=1*exp(jnθ(k)), that is, the reference signal transmitted by each terminal on 8 subcarriers of the 0-th OFDM symbol is the same. θ(k)=2πk/7, where k is a number of the transmission node (terminal), k=0,1,2,3, m is a subcarrier number of the reference signal, m=0,1,2,3, and n is an OFDM symbol number, n=0,1,2, ..., 6.

Exemplarily, as shown in FIG. 9, there are 4 transmission nodes (which may be any combination of terminals, base stations, or application devices; in this example, all are terminals) (i.e., terminal 0 to terminal 3 in the figure) transmitting data signals and reference signals on resource blocks composed of 14 OFDM symbols (i.e., the 0-th OFDM symbol to the 13-th OFDM symbol in the figure), each OFDM symbol containing 8 RBs (96 subcarriers).

Each terminal transmits the reference signal on the same 4 subcarriers in each OFDM symbol, and a frequency-domain interval between two adjacent subcarriers among the 4 subcarriers is 24 subcarriers. Each terminal transmits the reference signal on the first subcarrier of every 2 RBs; the data signals of the 4 terminals are respectively mapped on the last 23 subcarriers in every 2 RBs. The data of the 4 terminals on different OFDM symbols may vary in frequency domain positions. That is, on this resource block, each terminal transmits 4*14 reference signals at the same time-frequency position and transmits 23*14 data signals at different time-frequency positions.

The reference signal transmitted by the k-th terminal (i.e., terminal k) on the m-th subcarrier of the n-th OFDM symbol is: R(k,m,n)=1*exp(jnθ(k)), i.e., the reference signal transmitted by each terminal on the 4 subcarriers of the 0th OFDM symbol is the same. θ(k)=2πk/14, where k is a number of the transmission node (terminal), k=0,1,2,3, m is a subcarrier number of the reference signal, m=0,1,2,3, n is an OFDM symbol number, n=0,1,2, ..., 13.

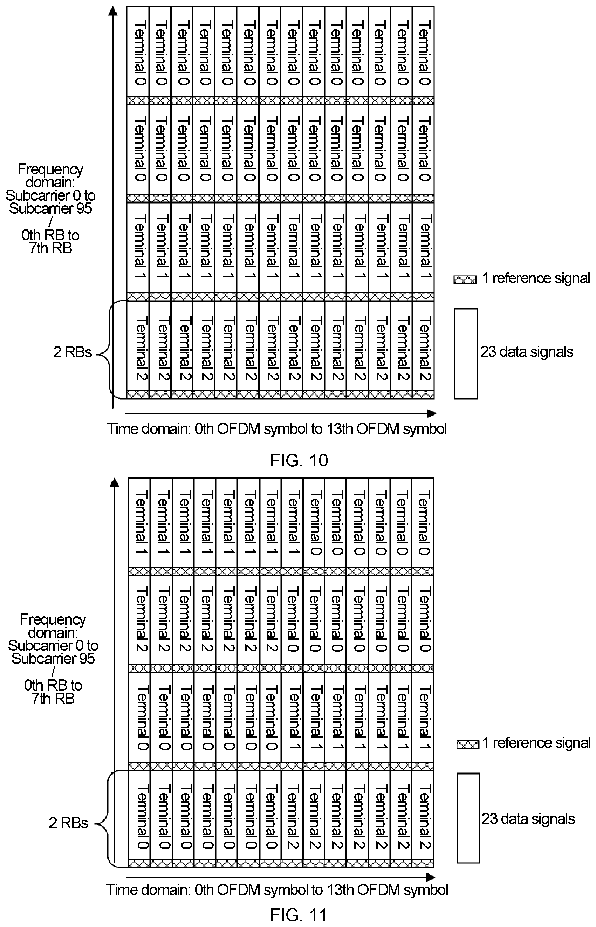

Exemplarily, as shown in FIG. 10, there are 3 transmission nodes (which may be any combination of terminals, base stations, or application devices; in this example, all are terminals) (i.e., terminal 0 to terminal 2 in the figure) transmitting data signals and reference signals on resource blocks composed of 14 OFDM symbols (i.e., the 0-th OFDM symbol to the 13-th OFDM symbol in the figure), each OFDM symbol containing 8 RBs (96 subcarriers).

Each terminal transmits the reference signal on the same 4 subcarriers in each OFDM symbol, and a frequency-domain interval between two adjacent subcarriers among the 4 subcarriers is 24 subcarriers. Each terminal transmits the reference signal on the first subcarrier of every 2 RBs; on each OFDM symbol, the number of subcarriers to which data of different terminals are mapped is different, that is, terminal 0 has 23*2 subcarriers, and terminal 1 and terminal 2 have 23 subcarriers. That is, on this resource block, each terminal transmits 4*14 reference signals at the same time-frequency position, terminal 0 transmits 23*2*14 data signals, and terminal 1 and terminal 2 transmit 23*14 data signals.

The reference signal transmitted by the k-th terminal (i.e., terminal k) on an m-th subcarrier of the n-th OFDM symbol is: R(k,m,n)=1*exp(jnθ(k)), i.e., the reference signal transmitted by each terminal on the 4 subcarriers of the 0th OFDM symbol is the same. θ(k)=2πk/14, where k is a number of the transmission node (terminal), k=0,1,2, m is a subcarrier number of the reference signal, m=0,1,2, and n is an OFDM symbol number, n=0,1,2, ..., 13.

Exemplarily, as shown in FIG. 11, there are 4 transmission nodes (which may be any combination of terminals, base stations, or application devices; in this example, those are 3 terminals and 1 base station) (i.e., terminal 0 to terminal 2 and base station 0 in the figure) together transmitting data signals and reference signals on resource blocks composed of 14 OFDM symbols (i.e., the 0-th OFDM symbol to the 13-th OFDM symbol in the figure), each OFDM symbol containing 8 RBs (96 subcarriers).

Each terminal or base station transmits the reference signal on the same 4 subcarriers in each OFDM symbol, and a frequency-domain interval between two adjacent subcarriers in the 4 subcarriers is 24 subcarriers. Each terminal or base station transmits the reference signal on the first subcarrier of every 2 RBs; data is respectively mapped on the remaining subcarriers. That is, on this resource block, each terminal transmits 4*14 reference signals at the same time-frequency position and transmits 23*14 data signals at different time-frequency positions.

The reference signal transmitted by the k-th transmission node (3 terminals and 1 base station, that is, 4 transmission nodes in total) on the m-th subcarrier of the n-th OFDM symbol is: R(k,m,n)=1*exp(jnθ(k)), that is, the reference signal transmitted by each transmission node on 4 subcarriers of the 0-th OFDM symbol is the same. θ(k)=2πk/14, where k is a number of the transmission node, k=0,1,2,3, m is a subcarrier number of the reference signal, m=0,1,2,3, and n is an OFDM symbol number, n=0,1,2, ..., 13.

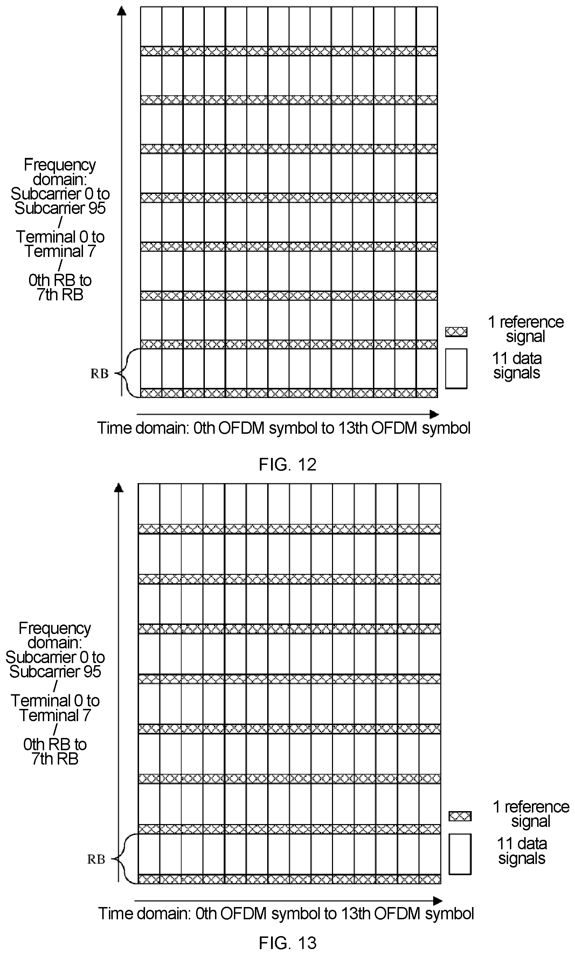

Exemplarily, as shown in FIG. 12, there are 8 transmission nodes (which may be any combination of terminals, base stations, or application devices; in this example, all are terminals) (i.e., terminal 0 to terminal 7 in the figure) transmitting data signals and reference signals on resource blocks composed of 14 OFDM symbols (i.e., the 0th OFDM symbol to the 13th OFDM symbol in the figure), each OFDM symbol including 8 RBs (96 subcarriers).

Each terminal transmits the reference signal on the same 8 subcarriers in each OFDM symbol, and a frequency-domain interval between two adjacent subcarriers among the 8 subcarriers is 12 subcarriers. Each terminal transmits the reference signal on the first subcarrier of all RBs; data signals of the 8 terminals are respectively mapped onto the last 11 subcarriers in each RB, and the 8 RBs from lower to upper respectively correspond to the 8 terminals. That is, on this resource block, each terminal transmits 8*14 reference signals at the same time-frequency position and transmits 11*14 data signals at different time-frequency positions.

The reference signal transmitted by the k-th terminal (i.e., terminal k) on the m-th subcarrier of the n-th OFDM symbol is: R(k,m,n)=R(k)*exp(jnθ(k)), i.e., each terminal transmits the same reference signal on the 8 subcarriers of the 0th OFDM symbol. θ(k)=2πk/14, where k is a number of the transmission node (terminal), k=0,1,2, ..., 7, m is a subcarrier number of the reference signal, m=0,1,2, ..., 7, and n is an OFDM symbol number, n=0,1,2, ..., 13.

Average power of the data signals is 1, and R(k) satisfies:
R(k)=1, k=0,1,2,3;
R(k)=2, k=4,5,6,7.

Exemplarily, as shown in FIG. 13, there are 8 transmission nodes (which may be any combination of terminals, base stations, or application devices; in this example, all are terminals) (i.e., terminal 0 to terminal 7 in the figure) transmitting data signals and reference signals on resource blocks composed of 14 OFDM symbols (i.e., the 0th OFDM symbol to the 13th OFDM symbol in the figure), each OFDM symbol containing 8 RBs (96 subcarriers).

Each terminal transmits the reference signal on the same 8 subcarriers in each OFDM symbol, and a frequency-domain interval between two adjacent subcarriers among the 8 subcarriers is 12 subcarriers. Each terminal transmits the reference signal on the first subcarrier of all RBs; data signals of the 8 terminals are respectively mapped onto the last 11 subcarriers in each RB, and the 8 RBs from lower to upper respectively correspond to the 8 terminals. That is, on this resource block, each terminal transmits 8*14 reference signals at the same time-frequency position and transmits 11*14 data signals at different time-frequency positions.

The reference signal transmitted by the k-th terminal (i.e., terminal k) on the m-th subcarrier of the n-th OFDM symbol is: R(k,m,n)=1*exp(jnθ(k)), i.e., the reference signal transmitted by each terminal on the 8 subcarriers of the 0th OFDM symbol is the same. k is a number of the transmission node (terminal), k=0,1,2, ..., 7, m is a subcarrier number of the reference signal, m=0,1,2, ..., 7, and n is an OFDM symbol number, n=0,1,2, ..., 13.

θ(k) is an element in a set {Θ|Θ=2π1/14, 1=0, 1, ..., 13}, and different k corresponds to different θ(k); this example provides an example: when k=0,1,2, ..., 7, θ(k) is 2π*5/14, 2π*2/14, 2π*8/14, 2π*7/14, 2π*3/14, 2π*6/14, 2π*11/14, 2π*12/14, respectively.

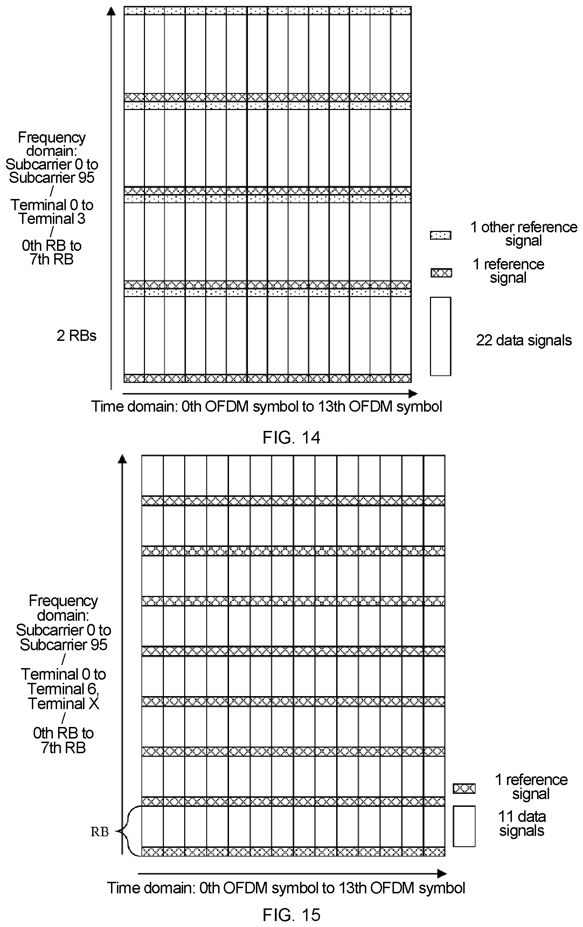

Exemplarily, as shown in FIG. 14, there are 4 transmission nodes (which may be any combination of terminals, base stations, or application devices; in this example, all are terminals) (i.e., terminal 0 to terminal 3 in the figure) transmitting data signals and reference signals on resource blocks composed of 14 OFDM symbols (i.e., the 0th OFDM symbol to the 13th OFDM symbol in the figure), each OFDM symbol containing 8 RBs (96 subcarriers).

Each terminal transmits the reference signal on the same 4 subcarriers in each OFDM symbol, and a frequency-domain interval between two adjacent subcarriers among the 4 subcarriers is 24 subcarriers. Each terminal transmits the reference signal on the first subcarrier of every 2 RBs; data signals of the 4 terminals are respectively mapped onto the middle 22 subcarriers in every 2 RBs, and in addition, the 4 terminals respectively transmit other reference signals on the last 1 subcarrier in every 2 RBs, and the 8 RBs from lower to upper respectively correspond to the 4 terminals. That is, on this resource block, each terminal transmits 4*14 reference signals at the same time-frequency position, transmits 22*14 data signals and 1*14 other reference signals at different time-frequency positions.

The reference signal transmitted by the k-th terminal (i.e., terminal k) on the m-th subcarrier of the n-th OFDM symbol is: R(k,m,n)=1*exp(jnθ(k)), i.e., each terminal transmits the same reference signal on the 4 subcarriers of the 0th OFDM symbol. θ(k)=2πk/14, where k is a number of the transmission node (terminal), k=0,1,2,3, m is a subcarrier number of the reference signal, m=0,1,2,3, and n is an OFDM symbol number, n=0,1,2, ..., 13.

Exemplarily, as shown in FIG. 15, there are 7 transmission nodes (transmission nodes may be any combination of terminals, base stations, or application devices; in this example, all are terminals) (i.e., terminal 0 to terminal 6 in the figure) transmitting data signals and reference signals on resource blocks composed of 14 OFDM symbols (i.e., the 0th OFDM symbol to the 13th OFDM symbol in the figure), each OFDM symbol containing 8 RBs (96 subcarriers).

Each terminal transmits the reference signal on the same 8 subcarriers in each OFDM symbol, and a frequency-domain interval between two adjacent subcarriers among the 8 subcarriers is 12 subcarriers. Each terminal transmits the reference signal on the first subcarrier of all RBs; other signals (other signals may include data signals and/or reference signals with a different type from the above-mentioned reference signal) of the 7 terminals are respectively mapped onto the last 11 subcarriers in each RB of the first 7 RBs, and the 7 RBs from lower to upper (i.e., the 0th RB to the 6th RB) respectively correspond to the 7 terminals. That is, on this resource block, each terminal of the 7 terminals transmits 8*14 reference signals at the same time-frequency position, and different terminals of the 7 terminals respectively transmit 11*14 data signals at different time-frequency positions.

The reference signal transmitted by the k-th terminal (i.e., terminal k) on the m-th subcarrier of the n-th OFDM symbol is: R(k,m,n)=1*exp(jnθ(k)), i.e., each terminal transmits the same reference signal on the 8 subcarriers of the 0th OFDM symbol. θ(k)=2πk/14, where k=0,1,2, ..., 6, k is a number of the transmission node (terminal); m=0,1,2, ..., 7, m is a subcarrier number of the reference signal; and n=0,1,2, ..., 13, n is an OFDM symbol number.

K transmission nodes may also superpose and transmit data signals on the same M subcarriers in the N OFDM symbols, and phase angles of the data signals and phase angles of all transmission nodes are different from each other.

In addition, there is another terminal, which does not belong to the previous 7 terminals, and this terminal is denoted as terminal X. Terminal X transmits the reference signal on the 8 subcarriers in each OFDM symbol, at the same position where the previous 7 terminals transmit the reference signals. An interval between every two adjacent subcarriers among the 8 subcarriers is 12 subcarriers. Other signals of terminal X (other signals may include data signals and/or reference signals with a different type from the above-mentioned reference signal) are mapped onto the last 11 subcarriers in the last RB (i.e., the 7th RB).

The reference signal transmitted by terminal X on the m-th subcarrier of the n-th OFDM symbol is: R(k,m,n)=exp(j*2pi*4*m/8)*exp(jnθ(k)), i.e., terminal X transmits the same reference signal on the 8 subcarriers of the 0th OFDM symbol. θ(k)=2π/14, where m=0,1,2, ..., 7, m is a subcarrier number of the reference signal; n=0,1,2, ..., 13, and n is an OFDM symbol number. That is, the phase angle of terminal X is the same as the phase angle of terminal 2, but the corresponding reference signals R(k,m,0) transmitted on the m-th subcarrier of the 0th time-domain symbol are different, and reference signals of terminal X and terminal 2 are mapped onto different time domains in the same Doppler domain.

Based on this, K transmission nodes transmit reference signals on the same M subcarriers in N time-domain symbols, the frequency-domain interval between two adjacent subcarriers among the M subcarriers being Q subcarriers, which helps the receiving side simultaneously acquire channel information of the K different transmission nodes from the reference signals on N*M subcarriers, thereby sensing the entire wireless environment channel condition. Meanwhile, by adjusting the frequency-domain interval Q between two adjacent subcarriers among the M subcarriers, the positions of the M subcarriers in the frequency domain may be flexibly configured, to adjust frequency-domain resources occupied by transmitting the reference signals, so as to adapt to different communication scenarios. A phase difference between reference signals transmitted by a k-th transmission node among the K transmission nodes on m-th subcarriers of two adjacent time-domain symbols among the N time-domain symbols is a same phase angle θ(k), so that the reference signal of each transmission node during the transmission does not interfere with the transmissions of the reference signals of other transmission nodes. Moreover, these reference signals may also be used for channel estimation in communication, without additionally occupying time-frequency resources, which helps improve spectral efficiency.

The above mainly introduces the solutions of the embodiments of the present disclosure from the perspective of methods. The following also shows a data transmission apparatus, and the data transmission apparatus is configured to perform the data transmission method in any of the above embodiments and implementations thereof.

**It** can be understood that, in order to implement the data transmission method, the data transmission apparatus includes the corresponding hardware structures and/or software modules for performing the respective functions. Those skilled in the art should easily realize that, in combination with the algorithm steps of the examples described in the embodiments of the present disclosure, the present disclosure can be implemented in the form of hardware or a combination of hardware and computer software. Whether a certain function is performed by hardware or by computer software driving hardware, depends on the preset applications and design constraints of the technical solutions. Professional technical personnel may use different methods to implement the described functions for each preset application, but such an implementation should not be considered as exceeding the scope of the present disclosure.

The embodiments of the present disclosure may divide the data transmission apparatus into functional modules according to the above method embodiments, for example, each functional module is divided corresponding to each function, or two or more functions may also be integrated into a functional module. The above integrated module may be implemented in the form of hardware or implemented in the form of software. **It** should be noted that the division of modules in the embodiments of the present disclosure is schematic and is only a division of logical functions, and there may be other divisions in actual implementations. The following takes an example for description that each functional module is divided corresponding to each function.

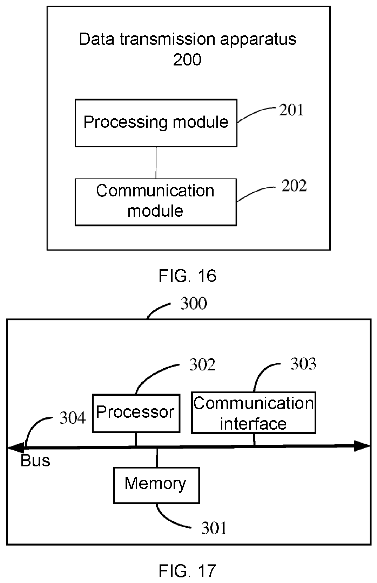

FIG. 16 is a structural schematic diagram of a data transmission apparatus 200 according to the embodiments of the present disclosure. The data transmission apparatus 200 includes: a processing module 201 and a communication module 202.

The processing module 201 is configured to determine that K transmission nodes transmit reference signals on same M subcarriers in N time-domain symbols.

The communication module 202 is configured for the K transmission nodes to transmit the reference signals on the same M subcarriers in the N time-domain symbols; a frequency-domain interval between two adjacent subcarriers among the M subcarriers is Q subcarriers, K and Q are positive integers, N and M are integers greater than 1; a phase difference between reference signals transmitted by a k-th transmission node among the K transmission nodes on m-th subcarriers of two adjacent time-domain symbols among the N time-domain symbols is a same phase angle θ(k); k is a sequence number of the transmission node among the K transmission nodes, m is a sequence number of the subcarrier among the M subcarriers, k is a non-negative integer less than or equal to K, m is a non-negative integer less than or equal to M.

In some embodiments, a phase of a reference signal transmitted by the k-th transmission node on an m-th subcarrier of an n-th time-domain symbol among the N time-domain symbols has a positive correlation with n, and n is a non-negative integer less than or equal to N.

In some embodiments, a reference signal transmitted by the k-th transmission node among the K transmission nodes on an m-th subcarrier of an n-th time-domain symbol among the N time-domain symbols is R(k,m,n), then R(k,m,n)=R(k,m,0)*exp(jnθ(k)), and R(k,m,0) is a reference signal transmitted by the k-th transmission node on an m-th subcarrier of a first time-domain symbol.

In some embodiments, phase angles θ(k) of different transmission nodes among the K transmission nodes are different.

In some embodiments, the phase angles θ(k) of different transmission nodes among the K transmission nodes are different, including: a phase angle θ(k) of the k-th transmission node among the K transmission nodes is determined according to a value of the k.

In some embodiments, the phase angles θ(k) of different transmission nodes among the K transmission nodes are different, including: a phase angle θ(k) of the k-th transmission node among the K transmission nodes satisfies a formula θ(k)=2πkB/N, B is a positive integer and is a system configuration parameter, and N is greater than or equal to B*K, k is 0, 1, 2, ..., K-1.

In some embodiments, the phase angles θ(k) of different transmission nodes among the K transmission nodes are different, including: the phase angles θ(k) of different transmission nodes among the K transmission nodes are an element in a phase angle set, respectively. The phase angle set at least includes K different elements, each of the K different elements satisfies a formula θ(k)=2πiB/N, i is a non-negative integer and is less than a difference between a floor of N/B and 1, and B is a positive integer and is a system configuration parameter.

In some embodiments, the phase angles θ(k) of different transmission nodes among the K transmission nodes are different, including: the phase angles θ(k) of different transmission nodes among the K transmission nodes are an element in a phase angle set, respectively. The phase angle set includes N different elements, each of the N different elements satisfies a formula θ(k)=2πi/N, i is a non-negative integer less than N-1, and N is greater than or equal to K.

In some embodiments, transmitting, by the K transmission nodes, the reference signals on the same M subcarriers in the N time-domain symbols, includes: positions of the M subcarriers in the N time-domain symbols being same; transmitting, by the K transmission nodes, the reference signals on same N*M subcarrier resources.

In some embodiments, an interval between two adjacent time-domain symbols among the N time-domain symbols is same.

In some embodiments, the N time-domain symbols are continuous in a time domain.

In some embodiments, an interval between two adjacent subcarriers among the M subcarriers is same.

In some embodiments, the communication module 202 is configured to transmit the reference signals in a subcarrier existing in each resource block in the N time-domain symbols.

In some embodiments, the M subcarriers are continuous in a frequency domain.

In some embodiments, Q is an integer multiple of a number of subcarriers contained in a resource block.

In some embodiments, reference signals transmitted by different transmission nodes among the K transmission nodes on other time-domain symbols other than a first time-domain symbol are different.

In some embodiments, reference signals transmitted by different transmission nodes among the K transmission nodes on a first time-domain symbol are different or the same.

In some embodiments, phase differences between reference signals transmitted by different transmission nodes among the K transmission nodes on adjacent time-domain symbols are different.

In some embodiments, the K transmission nodes include at least one of: a terminal, a base station, an application device.

In some embodiments, modulo values of reference signals transmitted by a same transmission node among the K transmission nodes on the same M subcarriers in the N time-domain symbols are same.

In some embodiments, a phase difference between reference signals transmitted by a same transmission node among the K transmission nodes on adjacent subcarriers among the M subcarriers in a same time-domain symbol is same.

In some embodiments, reference signals transmitted by a same transmission node among the K transmission nodes on the M subcarriers in a same time-domain symbol are same.

In some embodiments, the communication module 202 is configured for the K transmission nodes to transmit other signals on other subcarriers other than the M subcarriers in the N time-domain symbols.

In some embodiments, the communication module 202 is configured such that there is a transmission node for transmitting the other signals on different frequency-domain resources in the N time-domain symbols, among the K transmission nodes.

In some embodiments, the communication module 202 is configured for different transmission nodes among the K transmission nodes to transmit the other signals on different frequency-domain resources in the N time-domain symbols.

In some embodiments, a frequency-domain resource bandwidth for each transmission node among the K transmission nodes to transmit the other signals is less than a frequency-domain interval between a first subcarrier and a last subcarrier among the M subcarriers.

In some embodiments, power of the reference signals is greater than or equal to power of the other signals.

In some embodiments, the communication module 202 is configured for the K transmission nodes to superpose and transmit other signals other than the reference signals on the same M subcarriers in the N time-domain symbols, where phase angles of the other signals are different from phase angles of the K transmission nodes.

In a case where the functions of the above integrated modules are implemented in the form of hardware, the embodiments of the present disclosure further provide a structure of a communication apparatus, and the communication apparatus is configured to perform the data transmission method provided in the embodiments of the present disclosure. As shown in FIG. 17, the communication apparatus 300 includes: a communication interface 303, a processor 302, and a bus 304. In some embodiments, the communication apparatus may further include a memory 301.

The processor 302 may implement or perform various exemplary logical blocks, modules and circuits described in conjunction with the embodiments of the present disclosure. The processor 302 may be a central processing unit, a general-purpose processor, a digital signal processor, an application specific integrated circuit, a field programmable gate array or other programmable logic devices, a transistor logic device, a hardware component or any combination thereof, which may implement or perform various exemplary logical blocks, modules and circuits described in conjunction with the embodiments of the present disclosure. The processor 302 may also be a combination that implements computing functions, for example, including a combination of one or more microprocessors, a combination of a digital signal processor (DSP) and a microprocessor, or the like.

The communication interface 303 is configured to connect with other devices via a communication network. The communication network may be an Ethernet, a radio access network, a wireless local area network (WLAN), or the like.

The memory 301 may be, but be not limited to, a read-only memory (ROM) or other types of static storage devices capable of storing static information and instructions, a random access memory (RAM) or other types of dynamic storage devices capable of storing information and instructions, or may also be an electrically erasable programmable read-only memory (EEPROM), a magnetic disk storage medium or other magnetic storage devices, or any other medium capable of being used to carry or store the desired program codes in the form of instructions or data structures and capable of being accessed by a computer.

As an implementation, the memory 301 may exist independently of the processor 302. The memory 301 may be connected to the processor 302 via the bus 304 and used for storing instructions or program codes. The processor 302, when calling and executing the instructions or program codes stored in the memory 301, is capable of implementing the data transmission method provided in the embodiments of the present disclosure.

In another implementation manner, the memory 301 may also be integrated with the processor 302.

The bus 304 may be an extended industry standard architecture (EISA) bus or the like. Buses 304 may be divided into address buses, data buses, control buses, and the like. For the convenience of representation, only one thick line is used in FIG. 17 for representation, but it does not mean that there is only one bus or one type of bus.

Some embodiments of the present disclosure provide a computer-readable storage medium (e.g., a non-transitory computer-readable storage medium), and the computer-readable storage medium has stored computer program instructions therein. The computer program instructions, when running on a computer, cause the computer to perform the data transmission method as described in any of the above-mentioned embodiments.

In an exemplary implementation, the computer may be the communication apparatus described above, and the present disclosure does not limit the form of the computer.

In some examples, the above-mentioned computer-readable storage medium may include, but be not limited to, a magnetic storage device (e.g., a hard disk, a floppy disk or a magnetic tape, etc.), an optical disk (e.g., a compact disk (CD) or a digital versatile disk (DVD), etc.), a smart card and a flash memory device (e.g., an erasable programmable read-only memory (EPROM), a card, a stick or a key driver, etc.). The various computer-readable storage media described in the present disclosure may represent one or more devices and/or other machine-readable storage media for storing information. The term "machine-readable storage medium" may include, but be not limited to, a radio channel and various other media capable of storing, containing, and/or carrying instructions and/or data.

The embodiments of the present disclosure provide a computer program product including instructions, and the computer program product, when running on a computer, causes the computer to perform the data transmission method as described in any embodiment of the above-mentioned embodiments.

In the technical solutions provided in the embodiments of the present disclosure, K transmission nodes transmit reference signals on the same M subcarriers in N time-domain symbols, the frequency-domain interval between two adjacent subcarriers among the M subcarriers being Q subcarriers, which helps the receiving side simultaneously acquire channel information of the K different transmission nodes from the reference signals on N*M subcarriers, thereby sensing the entire wireless environment channel condition. Meanwhile, by adjusting the frequency-domain interval Q between two adjacent subcarriers among the M subcarriers, the positions of the M subcarriers in the frequency domain may be flexibly configured, to adjust frequency-domain resources occupied by transmitting the reference signals, so as to adapt to different communication scenarios. A phase difference between reference signals transmitted by a k-th transmission node among the K transmission nodes on m-th subcarriers of two adjacent time-domain symbols among the N time-domain symbols is a same phase angle θ(k), so that the reference signal of each transmission node during the transmission does not interfere with the transmissions of the reference signals of other transmission nodes. Moreover, these reference signals may also be used for channel estimation in communication, without additionally occupying time-frequency resources, which helps improve spectral efficiency.

The above is only the specific implementations of the present disclosure, but the protection scope of the present disclosure is not limited thereto, and any changes or substitutions within the scope of the technologies disclosed in the present disclosure should be covered within the protection scope of the present disclosure. Therefore, the protection scope of the present disclosure should be based on the protection scope of the claims.

## Claims

1. A data transmission method, comprising:
transmitting, by K transmission nodes, reference signals on same M subcarriers in N time-domain symbols; wherein a frequency-domain interval between two adjacent subcarriers among the M subcarriers is Q subcarriers, K and Q are positive integers, N and M are integers greater than 1;
wherein a phase difference between reference signals transmitted by a k-th transmission node among the K transmission nodes on m-th subcarriers of two adjacent time-domain symbols among the N time-domain symbols is a same phase angle θ(k); k is a sequence number of the transmission node among the K transmission nodes, m is a sequence number of the subcarrier among the M subcarriers, k is a non-negative integer less than or equal to K, m is a non-negative integer less than or equal to M.

2. The method according to claim 1, wherein a phase of a reference signal transmitted by the k-th transmission node on an m-th subcarrier of an n-th time-domain symbol among the N time-domain symbols has a positive correlation with n, and n is a sequence number of the time-domain symbol that is a non-negative integer less than or equal to N.

3. The method according to claim 1, wherein a reference signal transmitted by the k-th transmission node among the K transmission nodes on an m-th subcarrier of an n-th time-domain symbol among the N time-domain symbols is R(k,m,n), then R(k,m,n)=R(k,m,0)*exp(jnθ(k)), wherein R(k,m,0) is a reference signal transmitted by the k-th transmission node on an m-th subcarrier of a first time-domain symbol.

4. The method according to claim 1, wherein phase angles θ(k) of different transmission nodes among the K transmission nodes are different.

5. The method according to claim 4, wherein the phase angles θ(k) of different transmission nodes among the K transmission nodes are different, comprising: a phase angle θ(k) of the k-th transmission node among the K transmission nodes is determined according to a value of the k.

6. The method according to claim 4, wherein the phase angles θ(k) of different transmission nodes among the K transmission nodes are different, comprising: a phase angle θ(k) of the k-th transmission node among the K transmission nodes satisfies a formula θ(k)=2πkB/N, B is a positive integer and is a system configuration parameter, and N is greater than or equal to B*K, k is 0, 1, 2, ..., K-1.

7. The method according to claim 4, wherein the phase angles θ(k) of different transmission nodes among the K transmission nodes are different, comprising: the phase angles θ(k) of different transmission nodes among the K transmission nodes are an element in a phase angle set, respectively, the phase angle set at least comprises K different elements, each of the K different elements satisfies a formula θ(k)=2πiB/N, i is a non-negative integer and is less than a difference between a floor of N/B and 1, and B is a positive integer and is a system configuration parameter.

8. The method according to claim 4, wherein the phase angles θ(k) of different transmission nodes among the K transmission nodes are different, comprising: the phase angles θ(k) of different transmission nodes among the K transmission nodes are an element in a phase angle set, respectively, the phase angle set comprises N different elements, each of the N different elements satisfies a formula θ(k)=2πi/N, i is a non-negative integer less than **N-1,** and N is greater than or equal to K.

9. The method according to claim 1, wherein transmitting, by the K transmission nodes, the reference signals on the same M subcarriers in the N time-domain symbols, comprises:
positions of the M subcarriers in the N time-domain symbols being same;
transmitting, by the K transmission nodes, the reference signals on same N*M subcarrier resources.

10. The method according to claim 1, wherein an interval between two adjacent time-domain symbols among the N time-domain symbols is same.

11. The method according to claim 1, wherein the N time-domain symbols are continuous in a time domain.

12. The method according to claim 1, wherein an interval between two adjacent subcarriers among the M subcarriers is same.

13. The method according to claim 1, wherein there is a subcarrier for transmitting the reference signals, in each resource block in the N time-domain symbols.

14. The method according to claim 1, wherein the M subcarriers are continuous in a frequency domain.

15. The method according to claim 1, wherein Q is an integer multiple of a number of subcarriers contained in a resource block.

16. The method according to claim 1, wherein reference signals transmitted by different transmission nodes among the K transmission nodes on other time-domain symbols other than a first time-domain symbol are different.

17. The method according to claim 1, wherein reference signals transmitted by different transmission nodes among the K transmission nodes on a first time-domain symbol are different or the same.

18. The method according to claim 1, wherein phase differences between reference signals transmitted by different transmission nodes among the K transmission nodes on adjacent time-domain symbols are different.

19. The method according to claim 1, wherein the K transmission nodes comprise at least one of: a terminal, a base station, an application device.

20. The method according to claim 1, wherein modulo values of reference signals transmitted by a same transmission node among the K transmission nodes on the same M subcarriers in the N time-domain symbols are same.

21. The method according to claim 1, wherein a phase difference between reference signals transmitted by a same transmission node among the K transmission nodes on adjacent subcarriers among the M subcarriers in a same time-domain symbol is same.

22. The method according to claim 1, wherein reference signals transmitted by a same transmission node among the K transmission nodes on the M subcarriers in a same time-domain symbol are same.

23. The method according to claim 1, wherein the K transmission nodes transmit other signals on other subcarriers other than the M subcarriers in the N time-domain symbols.

24. The method according to claim 23, wherein there is a transmission node for transmitting the other signals on different frequency-domain resources in the N time-domain symbols, among the K transmission nodes.

25. The method according to claim 23, wherein different transmission nodes among the K transmission nodes transmit the other signals on different frequency-domain resources in the N time-domain symbols.

26. The method according to claim 23, wherein a frequency-domain resource bandwidth for each transmission node among the K transmission nodes to transmit the other signals is less than a frequency-domain interval between a first subcarrier and a last subcarrier among the M subcarriers.

27. The method according to claim 23, wherein power of the reference signals is greater than or equal to power of the other signals.

28. The method according to claim 1, wherein the K transmission nodes superpose and transmit other signals other than the reference signals on the same M subcarriers in the N time-domain symbols, and phase angles of the other signals are different from phase angles of the K transmission nodes.

29. A communication apparatus, comprising: a memory and a processor; wherein the memory is coupled to the processor; the memory is configured to store instructions executable by the processor; and the processor, upon executing the instructions, performs the method according to any one of claims 1 to 28.

30. A computer-readable storage medium, wherein computer instructions are stored on the computer-readable storage medium, and when the computer instructions are run on a communication apparatus, the communication apparatus performs the method according to any one of claims 1 to 28.
